# EUROPEAN PATENT SPECIFICATION

(11) **EP 0 659 608 B1**
(45) Date of publication and mention of the grant of the patent: **03.02.1999**
(21) Application number: 94650036.0
(22) Date of filing: 29.11.1994
(51) Int. Cl.: B60R 1/04, F16C 11/06

(54) **Mirror support bracket**
Spiegelhalterung
Patte d'attache support de miroir

(30) Priority: 30.11.1993 US 159838; 08.11.1994 US 336296
(43) Date of publication of application: 28.06.1995
(73) Proprietor: DONNELLY CORPORATION, Holland Michigan 49423 (US)
(72) Inventor: Hook, Richard R., Hudsonville, Michigan 49426 (US)
(74) Representative: Coyle, Philip Aidan

(56) References cited:
- EP-A- 0 020 214
- FR-A- 1 547 082
- FR-A- 1 574 027
- FR-A- 2 449 819
- FR-A- 2 545 169
- US-A- 3 554 582
- US-A- 4 254 931
- US-A- 4 936 533
- US-A- 5 100 095

## Description

This invention relates to mirror assemblies for use in vehicles, and more particularly to mirror support brackets having an adjustable pivot.

Vehicle interior rearview mirrors are commonly secured to either the header area near the top of the windshield or directly to the inside surface of the windshield in the forward vision area of the driver. Most have a ball member either extending from or into the mirror body to enable pivotal adjustment of the mirror. In one prior-known mirror having a ball member extending out of the mirror, the ball is captured in one end of a swaged tube. A helical compression spring is disposed in the tube and engages a disk which, in turn, engages the ball member. The disk has a portion which partially conforms to the shape of the ball. Often a similar structure is duplicated at the opposite end of the tube to connect the mirror to a mounting member.

In Conventional mirror assemblies, the clamping pressure on the ball is fixed at the instant it is assembled. As temperature increases or decreases, the clamping pressure changes as a direct result of the different coefficients of expansion and contraction of the materials. On one day, the ball joint may be stiff and difficult to adjust; while on other days the mirror may be loose and not stay in place.

Another disadvantage of the mirror assemblies described above is the inability to interchange mirror heads. When a ball pivot extends from the mirror mounting arm into the mirror housing, the housing must be specifically designed to accept that ball member on a permanent basis. Changing support arms for specific mirror heads and vice-versa without partial destruction of the mirror was impossible. Furthermore and related thereto is the inability to replace one of the components of the mirror assembly if it breaks; consequently, the entire mirror assembly is usually replaced. The desire to change mirror heads, stays, or replacement parts results in a replacement of otherwise perfectly good components and increases cost to the consumer.

It is an object of the invention to provide a support bracket for a vehicle rearview mirror which can be designed to overcome or mitigate these disadvantages.

This object is achieved by the invention claimed in Claim 1.

A support bracket according to the pre-characterising part of claim 1 is described in United States Patent Specification 4,936,533. However, it is not a single ball joint support bracket with the socket held rigidly at the second end of the mirror stay, nor does the mirror stay include means on the second end adjacent the cup for holding the biasing member in biasing engagement with the side of the cup opposite the opening.

The present invention provides substantial advantages over prior mirror support brackets. The support bracket may be designed to exert a substantially constant clamping pressure on the ball member extending from the mirror over a wide range of ambient temperature conditions. The support bracket can also be designed to accept a wide array of mirror head types without replacing the bracket, and can also adapt to balls of different sizes. The clamp assembly can also be easily incorporated in conventional breakaway header- or windshield-mounted mirror assemblies, which allow the support and rearview mirror to release from the vehicle.

Embodiments of the invention will now be described with reference to the accompanying drawings, wherein:
Fig. 1 is a fragmentary, perspective view of a header-mounted mirror assembly installed on a vehicle incorporating an embodiment of the invention;
Fig. 2 is a fragmentary, side-elevational view of the mirror assembly shown in Fig. 1;
Fig. 3 is a top view of the mirror assembly;
Fig. 4 is a fragmentary, exploded view of the embodiment of the invention shown in Figs. 1-3;
Fig. 5 is a fragmentary, side-section view of the embodiment of the invention shown in Fig. 4;
Fig. 6 is a fragmentary, front-elevational view of the embodiment of the invention shown in Fig. 4;
Figs. 7-9 are side and front views of one half of the socket of the embodiment of the invention shown in Fig. 4;
Figs. 10-12 are front, side, and sectional views, respectively, of the cup used in the embodiment of the invention shown in Fig. 4;
Figs. 13 and 14 are front and sectional views of the spring used in the embodiment of the invention shown in Fig. 4;
Figs. 15-17 are fragmentary sectional views of a second embodiment of the invention;
Figs. 18-19 are fragmentary sectional views of a third embodiment of the invention; and
Figs. 20-22 are back, side, and front elevational views, respectively, of an alternate embodiment of a cup.

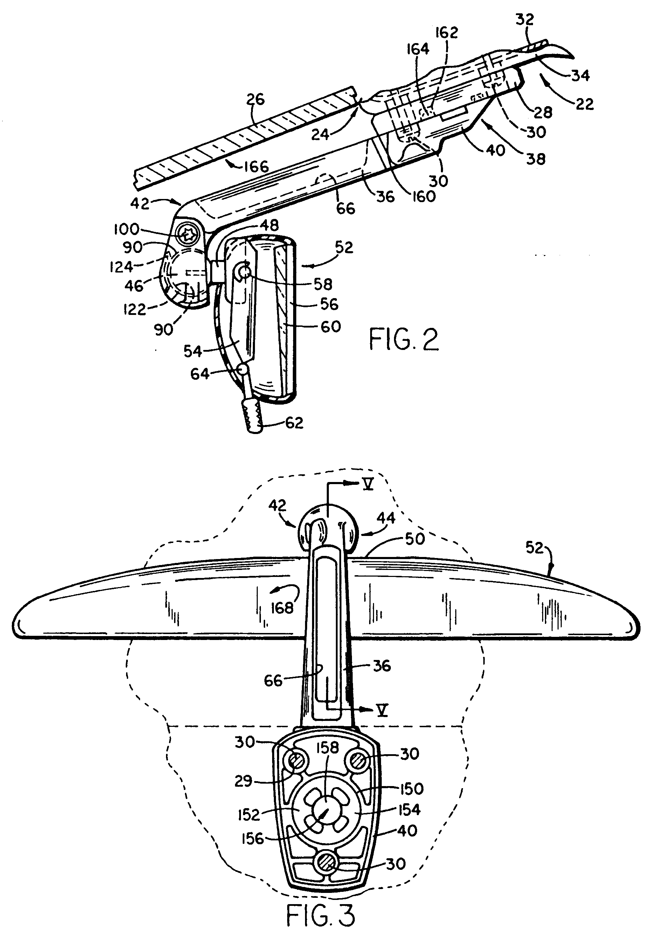

Referring to the drawing figures, mirror assembly 20 is shown mounted to an interior header 22 of a vehicle close to the upper edge 24 of windshield 26. Assembly 20 is attached to header 22 by a securing member 28 retained by screws 30 extending therethrough and extending into sheet metal 32 concealed by headliner 34 (Fig. 2). Attached to securing member 28 and dependent therefrom is a mirror stay or support arm 36 having a first end 38 forming a base 40. Base 40 is preferably coupled to securing member 28 using a breakaway connection, such as described in greater detail below. Another example of such a coupling is disclosed in commonly assigned United States Patent Number 5,100,095 to Haan et al. Such breakaway, detachably coupling allows separation upon the application of a predetermined force such as is prescribed in safety standards and specifications such as Japanese Industrial Standard "Mirrors for Automobiles," JIS D 5705-1987; Federal Motor Vehicle Safety Standard NO. 111 "Rearview Mirrors," Part 571, S111-1 - S111-6 (Rev. 12/2/92); and official Journal of the European Communities, L90 Vol. 28, March 29, 1985; Commission Directive of 18 February 1985 adapted Council Directive 71/127/EEC relating to rearview mirrors of motor vehicles (85/205/EEC). The coupling between base 40 and securing member 28 allows separation of base 40 from member 28 should an impact occur.

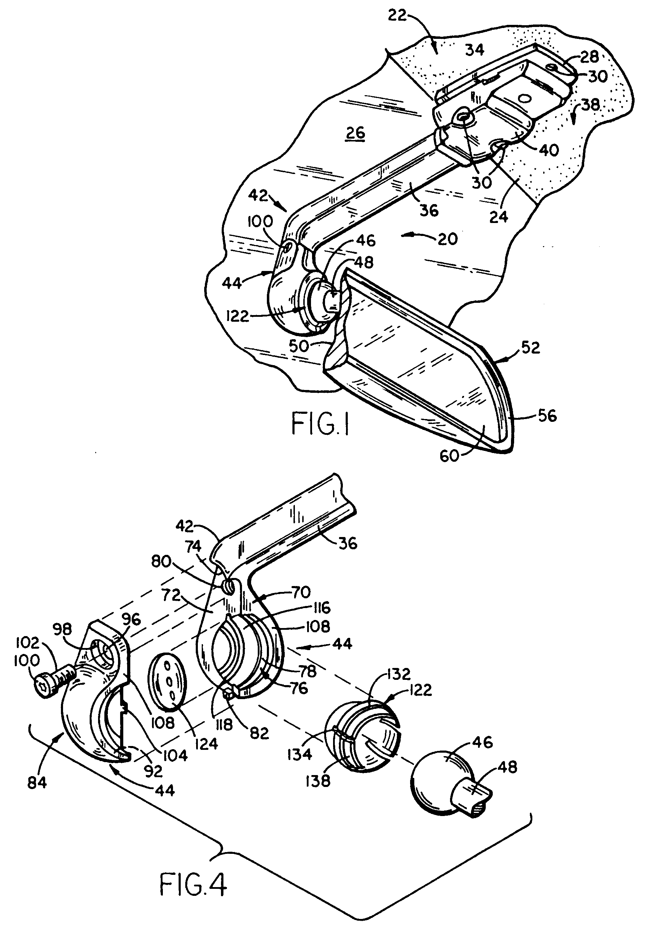

As an alternative to securing member 28 attached to header 22 as seen in Fig. 1, member 28 and base 40 may be attached to the interior surface of windshield 26 by a conventional mounting button adhered to the windshield surface by a layer of conventionally known metal-to-glass adhesive such as a polyvinyl butyral available from Monsanto Company of St. Louis, Missouri. Securing member 28 would then be designed to be slidably received over the mounting button to suspend mirror assembly 20 from windshield 26.

An opposite end 42 of stay 36 terminates in a ball-mount retention assembly 44. Assembly 44 receives a ball member 46 disposed at one end of an arm 48 extending from the back 50 of mirror assembly 52 such as disclosed in commonly assigned United States Patents 4,936,533 to Adams et al. and 5,100,095 to Haan et al. Referring to Fig. 2, ball member 46 projects from a day/night pivot actuator 54 rotatably mounted within rearview mirror housing or frame 56 on upper pivot shaft 58. Frame 56 encloses and retains a prismatic mirror element 60 having nonparallel front and rear surfaces. A pivot lever 62, supported on a lower pivot shaft 64 and joined integrally to the lower edge of pivot actuator 54, may be moved back and forth to pivot frame 56 and prism 60 between day and night reflective positions about shaft 58. In the day position, substantially all of the light incident upon the second, reflective coated, rear surface of the prism from the rear of the vehicle is reflected to the eyes of the driver. In the night position, when the mirror case and prism are pivoted about shaft 58, a significantly reduced amount of light is reflected from the non-reflective coated front surface of prism 60, thereby reducing glare and improving the driver's night vision.

To reduce the weight of mirror assembly 20, lightweight yet rigid materials are used to make the various components. For example, it is preferred that securing member 28, mirror frame 56, pivot actuator 54, and pivot lever 62 be formed from a polymeric material. Mirror stay 36 is preferably die cast from S.A.E. zinc 925, although aluminum, or other relatively lightweight materials, could also be used. Further cost savings and structural benefits are obtained by a recess 66 extending substantially the length of stay 36, extending inwardly from a side closest to windshield 26. Recess 66 substantially parallels the longitudinal axis of stay 36 and defines lateral walls terminating in end walls proximate each end of stay 36. Lateral walls essentially act like I-beams, providing the strength while reducing a substantial amount of material and weight from stay 36.

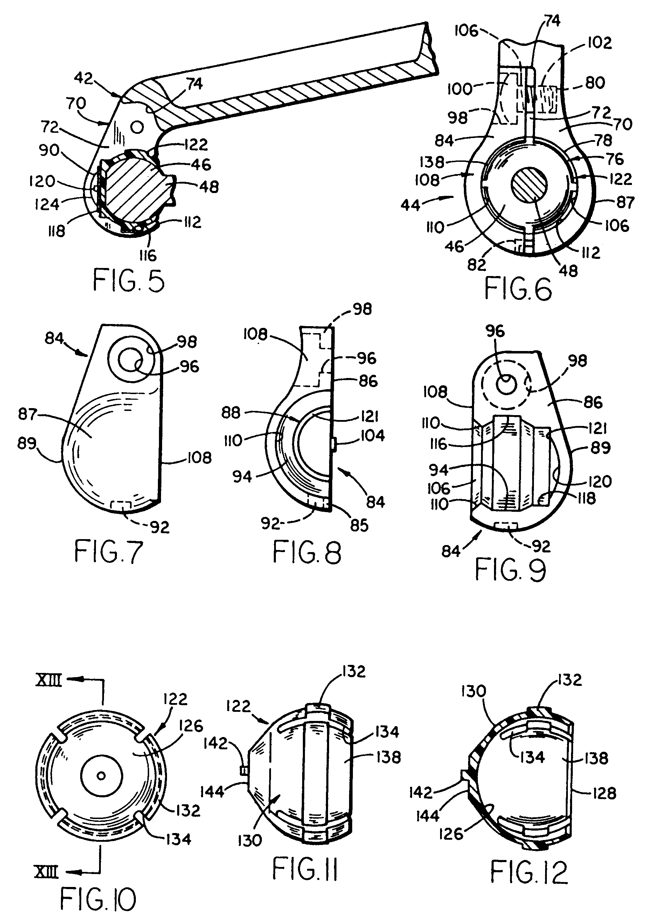

Referring now to Figs. 4-6, one embodiment of retention assembly 44 includes a fixed jaw portion 70 extending from end 42 and having a lateral, flat surface 72 contained substantially in a plane including the longitudinal axis of stay 36. Surface 72 extends toward second end 42 before terminating in a shoulder 74. Surface 72 includes a generally hemispherical depression 76 formed by wall 78. Between shoulder 74 and depression 76 is a hole 80 which extends into surface 72 to receive a threaded fastener described below. Located at the lower end of surface 72, below depression 78, is a hook, finger, or tenon 82 for reasons which will become apparent below.

Cooperating with fixed jaw 70 and engaging surface 72 is a cap 84 generally constituting a mirror image of fixed jaw 70 from shoulder 74 downward (Figs. 7-9). Cap 84 is preferably die cast from S.A.E. 903 or 925 zinc, although other materials may also be used. Cap 84 includes a surface 86 containing a generally hemispherical depression 88, which when coupled to fixed jaw 70, defines a generally spherical cavity or socket 90 shown in Figs. 2 and 5. Below depression 88 is a hole or mortise 92 extending through wall 94 and separated from surface 86 by a bridge 85 and adapted to receive hook or tenon 82 described above. Above depression 88 and extending through cap 84 is hole 96 aligned with hole 80 in jaw 70. Hole 96 includes a recess 98 on the opposite side to receive and recess the head 100 of threaded fastener 102 extending therethrough and received in hole 80 (Figs. 4, 6). Located behind depression 88 and extending approximately 0.25 to 0.75 millimeter (mm) perpendicularly from surface 86, is boss 104, which provides a uniform space between the rear edge 89 of cap 84 and the cooperating edge on the fixed jaw 70. The exterior surfaces and profiles 87 of cap 84 and fixed jaw 70 are generally identical, mirror images of each other to form the generally spherical clamp assembly 44 and provide sufficient room for socket 90.

Referring to Figs. 4-6, socket 90 is accessible through an opening 106 formed in front surface 108 of clamp 44 by cooperating edges 110, 112. Opening 106 is such to allow reasonable room for the vehicle operator to adjust mirror 52, yet retain ball member 46 therein, and with a dimension less than the diameter of ball 46 to prevent ball member 56 from escaping when assembled. The inner surface of socket 90 defined by interior wall 114 is generally spherical and contains a pair of cylindrical grooves 116, 118 formed therein and concentric with one another. Groove 116 is preferably contained in a plane substantially parallel to front surface 108 and located along the greatest diameter of socket 90. Groove or channel 118 is parallel to groove 116 and located between groove 116 and the bottom or back wall 120 (Fig. 9). Channels 116, 118 in socket 90 receive and retain cup 122 and a disk-shaped spring 124, respectively, both described below.

Cup 122 (Figs. 10-12) is preferably formed from a polymeric material, most preferably on acetal resin which is a hard, tough plastic often used as a substitute for many metals. A preferred acetal resin is CELCON UV-90 available from Hoechst-Celenese of Chatham, New Jersey. Cup 122 is preferably molded having a substantially smooth spherical interior wall 126 designed to closely conform to ball member 46 received therein through opening 128 having generally the same dimension as does opening 106. The exterior wall 130 is also generally spherical in form to conform to the interior 114 of socket 90. Extending from exterior wall 130 is a circumferential flange 132 contained in a plane substantially parallel to opening 128. Flange 132 is dimensioned to be received in socket groove 116. In a preferred embodiment, cup 122 contains a plurality of slots 134, preferably four, extending from opening 128 to a point slightly beyond flange 132. Slots 134 are preferably equidistant from each other and are contained in two imaginary planes intersecting each other at a right angle. Slots 134 define an equal number of cup segments 138 which are able to flex to increase and decrease the interior diameter of wall 126 as well as the size of opening 128.

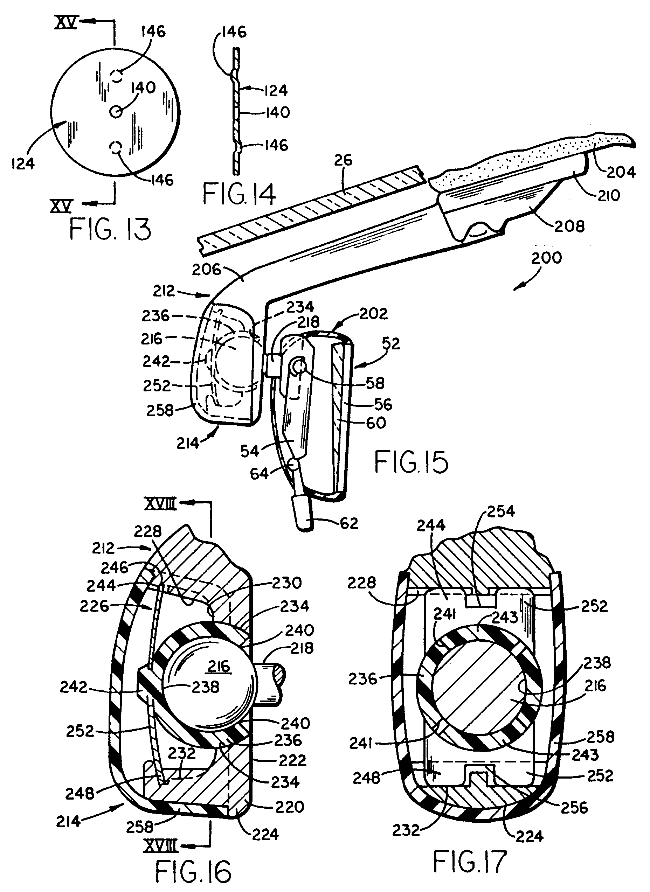

Spring 124 (Figs. 13, 14) is a disk-like member preferably formed from spring steel and most preferably S.A.E. 1050 annealed spring steel, heat treated by the process of austempering. The steel is most preferably finished with zinc plate and black di-chromate to prevent corrosion. The spring is preferably circular in shape and of a dimension to fit within channel 118 in socket 90. A hole 140 is formed in the spring 124, passing through the center thereof, to receive a projection 142 extending from a flat 144 (Figs. 11, 12) at the back of cup 122 such that spring 124 lies adjacent flat 144. Spring 124 may also contain one or more dimples 146 to aid in separating each disk after manufacturing. Although spring 124 is described as a circular disk, other spring shapes may also be employed including rectangular, square, hexagonal, cross-shaped, leaf, or coiled springs.

Referring again to Figs. 5, 6, ball member 46 is pressed into the interior 126 of cup 122 by inserting ball 46 through opening 128, spreading cup segments 138 apart in doing so. Spring 124 is attached to the back 144 of cup 122 by projection 142 extending through hole 140. Cup 122 and ball member 46 are placed in the disassembled socket 90 such that circumferential flange 132 is located in channel 116. Spring 124 is received in channel 118 such that the peripheral edge of the spring engages shoulder 121 and the center of the spring is spaced from back 120. Cap 84 is aligned with fixed jaw 70, with hole 92 receiving hook 82 and aligned so that spring 124 and cup flange 132 are located in their respective channels. Screw 102 is inserted through hole 96 and threaded into hole 80 in fixed jaw 70, and adjusted to clamp cup 122 and cup segments 138 about ball member 46. Spring 124 disposed in the bottom of socket 90 forces cup 122 forward in socket 90 against lip 110 which, in turn, causes cup segments 138 to be further compressed about ball member 46. The conformance of cup interior 126 to the exterior of ball member 46, the adjustable clamping action of cap 84 with jaw 70, and spring 124 acting on cup 122, combine to provide a frictional coupling which exerts a substantially constant clamping action on ball member 46 through a wide range of ambient temperature.

The clamping force may be adjusted by screw 102 forcing the end of clamping plate or cap 84 against the upper end of fixed jaw 70. The fixed points established by hook 82 in hole 92, and boss 104 extending from cap 84, cause socket 90 to close about the end having opening 106. The compression of socket 90 at the end containing opening 106 forces cup segments 138 tightly inward against ball member 46 to place more friction on ball member 46 if necessary. Compression of cup 122 at opening 106 tends to move cup 122 back away from opening 106. However, spring 124 at the back of cup 122 reacts by forcing cup 122 toward opening 106. The result is a substantially constant clamping pressure on ball member 46.

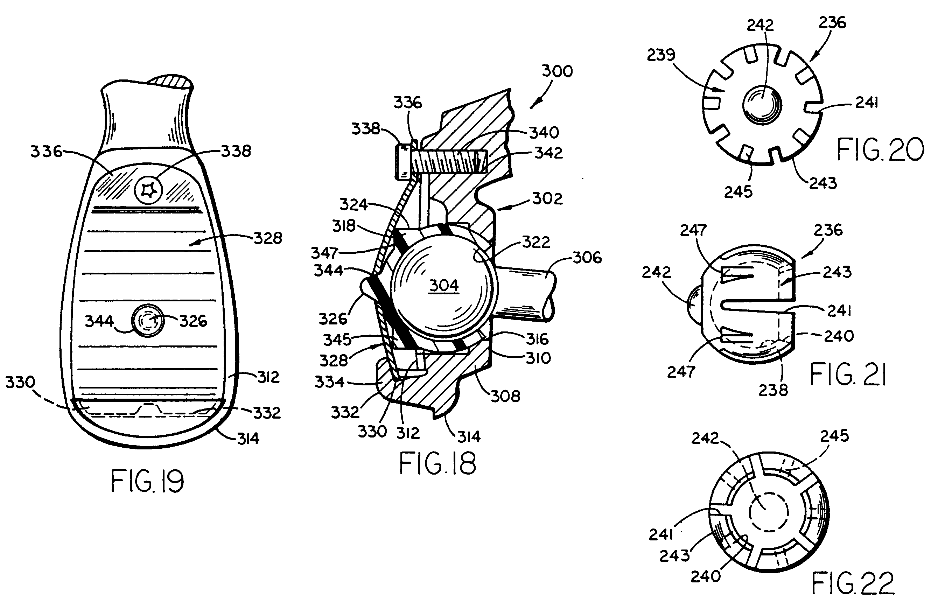

Referring to Figs. 15-17, an alternate embodiment of mounting system 200 for attaching a rearview mirror 202 to a vehicle header 204 includes a mirror stay or support arm 206 having a first base end 208 detachably coupled to a securing member 210 which, in turn, is fixed to the vehicle header 204. Base 206 may be attached to securing member 210 in a number of ways and is preferably coupled in a manner such that base 208 breaks away or releases from securing member 210 upon a substantial force exerted upon stay arm 206.

The opposite end 212 of stay arm 206 terminates in a ball-mount retention assembly 214. Assembly 214 receives and retains a ball member 216 at an end of a ball arm 218 extending from the back of the rearview mirror assembly 202, such as disclosed in United States Patents 4,936,533 and 5,100,095. Ball member 216 projects from a day/night actuator 54 rotatably mounted on shafts 58, 64 within the mirror housing or frame 56 as described above.

Ball-mount retention assembly 214 includes a housing 220 having a generally flat front surface or face 222 with a generally oblong or oval peripheral edge 224. Opposite face 222, on a back of assembly 214, is a recess 226 having an upper shoulder 228, a floor 230 generally parallel to face 222, and a lower flange 232. Formed in floor 230 and extending through to face 222 is a spherical hole or socket 234 having a larger diameter in floor 230 than in face 222. The diameter of socket 234 in face 222 is sufficiently large to pass ball member 216 therethrough.

Capturing and substantially surrounding ball member 216 in recess 226 is a ball cup 236 preferably formed from a polymeric material, and most preferably an acetal resin such as Celcon UV-90 described above. Cup 236 has a substantially smooth spherical inner-wall 238 designed to conform closely to ball member 216 received therein through opening 240. The outer surface 239 of cup 236 adjacent cup opening 240 conforms closely to the spherical surface defining socket 234. On cup 236 opposite opening 240 is a central projection 242 to be used to properly position and sustain the position of cup 236 in socket 234. Surrounding central projection 242 and spaced equidistantly from each other and from projection 242, are a plurality of bosses 245, each having a shoulder 247 which assist in locating the cup during automatic assembly. See Figs. 20-22 for detailed views of cup 236.

In the preferred embodiment, cup 236 includes a plurality of slots 241 which extend from opening 240 partially back toward projection 242. Slots 241 are preferably spaced equidistant from each other to define a like number of cup segments 243. Each segment 243 is designed to expand and increase the size of opening 240 to allow ball member 216 into the spherical chamber formed by wall 238. Each segment is also designed to be forced inwardly against ball member 216 by socket 234 when cup 236 is pushed from behind by spring 252. The compression of the segments about ball member 216 increase the friction, and, as a result, retain rearview mirror 52 in position.

Received about projection 242 and having a first end 244 engaging a slot 246 in top wall 228 and an opposite end 248 received in a slot 250 in flange 232 is a spring 252, forcing cup 236 into socket 234. Spring 252 is preferably generally rectangular in shape and made from S.A.E. 1050 annealed spring steel, austempered to provide optimum behavioral characteristics. Spring 252 is most preferably finished with zinc plating and black di-chromate to prevent corrosion. Formed at each end 244, 248 are slots 254, 256 to allow a tool to bend and compress spring 252 so as to engage the slots 246, 250 in recess 226.

Concealing recess 226 and fitting generally flush with peripheral edge 224 and the exterior surface of stay 206 is a cover 258. It is preferred that cover 258 be molded from a polymeric material such as polypropylene and have a shape, texture, and color that conforms and blends with that provided on stay 206. Cover 258 is intended to attach securely to the retention assembly 214, yet be easily removed in order to remove spring 252 and allow the replacement of mirror 202, without the need to replace stay 206.

Yet another embodiment of the invention 300, shown in Figs. 18 and 19, operates in generally the same principle as that shown above in Figs. 15-17. The mirror assembly 300 includes a mirror stay or support arm having a first base end detachably coupled to a securing member which, in turn, is fixed to the vehicle header. The base may be attached to the securing member in a number of different ways, and is preferably coupled such that the base breaks away or releases from the securing member upon a substantial force exerted upon the mirror stay or arm. The opposite end of the stay arm terminates in a ball-mount retention assembly 302 which receives and retains a ball member 304 fixed at one end of an arm 306 extending from the back of a rearview mirror, such as shown in Fig. 15 and disclosed in United States Patents 4,936,533 and 5,100,095. The ball member 304 preferably projects from a day/night actuator rotatably mounted on shafts within the mirror housing as described above.

Ball-mount retention assembly 302 includes a housing 308 and defining generally parallel front and back surfaces 310, 312, respectively, and having a general oblong or oval peripheral edge 314. Extending through housing 308 and front and back surfaces 310, 312 is a generally spherical hole or socket 316 having a larger diameter in back surface 312 than that defined in the front surface 310. The diameter of socket 316 defined in the front surface 310 is slightly larger than the diameter of the ball member 304 such that the ball member can be inserted through housing 308 from the front surface 310.

Capturing and substantially surrounding ball member 304 within socket 316 is a ball cup 318 preferably formed from a polymeric material, and most preferably an acetyl resin such as CELCON UV-90 identified above. Cup 318 has a substantially smooth spherical inner wall designed to closely conform to the ball member 304 received therein through an opening 322. The outer surface or circumference 324 of cup 318 adjacent opening 322 conforms closely to the spherical surface defining socket 316. Opposite cup opening 322 and extending from an outer surface 324 of cup member 318 is a projection 326 for properly positioning and sustaining the position of cup 318 within the socket 316. Surrounding central projection 326 and spaced equidistantly from each other and from projection 326, are a plurality of bosses 345, each having a shoulder 347 which assist in locating the cup during automatic assembly.

It is preferred that cup 318 include a plurality of slots, such as 241 shown in Figs. 20-22, which extend from the opening 322 partially back toward projection 326. The slots are preferably spaced equidistantly from each other to define a like number of cup segments such as 243. Each segment is designed to expand to allow the ball member 304 into the interior of the cup 318. Each segment is also designed to be forced inwardly against the ball member 304 by the socket 316 when the cup 318 is pushed or forced into socket 316 in a direction toward surface 310. The compression of the segments about the ball member increases the friction and, as a result, retains the rearview mirror in position.

Received about projection 326 is a spring member 328 having a first end 330 fixed in a slot 332 defined in a member 334 extending from the back surface 312. The opposite end 336 of the spring 328 is urged against the back side or surface 312 and retained in place by a threaded fastener 338, such as a TORX™ head self-tapping screw. The shaft 340 is received in hole 342 extending from back surface 312 into the stay of the mirror assembly. With the end 330 of the spring 328 secured in slot 332, and the opposite end 336 urged toward surface 312 by fastener 338, spring 328 forces cup 318 into socket 316. The amount of clamping force on the socket 318 may be adjusted by adjusting threaded fastener 338. The compressive force is increased by tightening fastener 338, or the compressive force may be reduced by moving threaded fastener 338 outward with respect to surface 312. Cup 318 may move in relation to spring 328 and be located with respect thereto by projection 326 extending through aperture 344 to spring 328.

Concealing back surface 312 and fitting generally flush with the peripheral edge of the housing 308 is a cover substantially identical to cover 258 shown in Fig. 16. It is preferred that the cover be molded from a polymeric material such as polypropylene and have a shape, texture, and color that conforms and blends well with the stay of the mirror assembly. The cover is intended to attach securely to housing 308, yet be easily removed in order to provide access to the spring 328 and allow replacement of the mirror, without the need to replace the stay.

Referring back to Figs. 1-3, it is intended that any embodiment of the invention be used in conjunction with what is known as a "break-away" mirror mounting assembly such as disclosed above, or in Japanese publication 57-55239. As shown in the drawing figures, securing member 28 includes a recess 150 for retaining a spring washer 152 having inwardly projecting fingers 154. Extending through the center of washer 152 is a bolt 156 with the head 158 engaging fingers 154. The threaded end of bolt 156 is received in stay base 40 to hold base against securing member 28. The lower surface 160 of securing member 28 contains a plurality of recesses 162 to be engaged by a like number of projections 164 extending from base 40. When an impulsive force tending to rotate stay 36 in a direction indicated by arrow 166 (Fig. 2), or in a direction indicated by arrow 168 (Fig. 3) where bolt 156 is the pivot point, bolt head 158 is drawn through the fingers 154 of spring washer 152 and stay 36 separates therefrom, absorbing the forces causing the separation.

The advantages offered by the above-described construction include providing a substantially constant clamping pressure over a wide range of temperatures. For example, it is preferred that the clamping pressure is substantially constant between -20°C and 50°C and more preferably between -40°C and 95°C. The clamping pressure exerted on the mirror ball mount can also be changed by way of an adjustment screw, thus providing greater flexibility in adjustment than prior mirrors. As a result of the adjustability, the mirror stay assembly can receive, and fully adjustably support, any one of a number of rearview mirror heads, including electrochromic, liquid crystal, and conventional prismatic mirrors.

## Claims

1. A support bracket for a vehicle rearview mirror assembly, said rearview mirror having a ball member extending therefrom, the support bracket comprising a mirror stay (36, 206, 300) having a second end (42, 212) terminating in a socket (90, 234, 316) having an aperture for receiving the ball member, the socket having an at least partially spherical interior surface; a cup (122, 236, 318) disposed within the socket and having an opening for receiving the ball member extending from the mirror assembly and a side opposite the opening, the cup substantially enclosing the ball member; and a biasing member (124, 252, 328) engaging the side of the cup opposite the opening to force the cup against the socket and thereby compress the cup about the ball member, characterised in that the support bracket has a single ball joint (44) which includes the socket (90, 234, 316), the socket being held rigidly at the second end (42, 212) of the mirror stay (36, 206, 300), and the mirror stay further includes means (118, 246, 332) on the second end of the mirror stay adjacent the cup for holding the biasing member in biasing engagement with the side of the cup opposite the opening.

2. A support bracket as claimed in claim 1, wherein the cup and biasing member include means (140,142, 242, 326, 344) extending between the cup and the biasing member for locating the cup on the biasing member to position the cup within the socket.

3. A support bracket as claimed in claim 1 or 2, further including a mechanism (102, 340) adjusting the force exerted by the biasing member on the cup.

4. A support bracket as claimed in claim 3, wherein the mechanism includes an adjustable fastener (102, 340) for moving the biasing member with respect to the socket.

5. A support bracket as claimed in any preceding claim, wherein the biasing member includes a leaf spring (124, 252, 328).

6. A support bracket as claimed in any preceding claim, wherein the mirror stay is supported at a first end (38) remote from the socket (90) in a securing member (28,210) attached to the vehicle and means (40, 208) are provided for releasably coupling the first end of the stay to the securing member to allow the stay to release and separate from the securing member upon impact by a force of predetermined magnitude acting on the stay.

7. A support bracket as claimed in any preceding claim, wherein the socket comprises a portion (220) fixed to and dependent from the second end (42, 212) of the stay and having a face (222) on one side and a recess (226) on a second and opposite side; and a hole (234) extending through the fixed portion from the face to the second side and having a dimension to freely receive the ball member therethrough; the cup being disposed in the recess and receiving the ball member therein, the cup having a generally spherical outer surface engaging the inner surface of the hole; and the biasing member comprising a spring (226) having one end (248) disposed in the recess, the spring engaging the cup for forcing the cup into the hole and clamping the cup about the ball member.

8. A support bracket as claimed in claim 7, further including a cover (258) received over the recess and concealing the spring and cup.

9. A support bracket as claimed in claim 7 or 8, wherein the spring has an opposite end (336) adapted to be adjustable with respect to the socket to adjust a clamping force exerted by the spring on the cup.

10. A support bracket as claimed in any one of claims 1 to 6, wherein the socket comprises a first portion (70) of a generally spherical clamp carried by the second end (42, 212) of the stay; and a second portion (84) of a generally spherical clamp detachably coupled to the first portion and co-operating with the first portion to define the generally spherical clamp.

11. The combination of a support bracket as claimed in claim 1 and a rearview mirror assembly, wherein the mirror stay has a first end (38, 208) forming a breakaway connection with the header portion of a vehicle above the vehicle windshield; and the rearview mirror assembly (52) has a ball member extending therefrom, the ball member (46) being received in the cup to provide an adjustment for the rearview mirror.

## Patentansprüche

1. Halterung für eine Fahrzeugrückspiegelbaugruppe, wobei der genannte Rückspiegel ein sich von ihm erstreckendes Kugelelement hat, wobei die Halterung folgendes aufweist: einen Spiegelarm (36, 206, 300) mit einem zweiten Ende (42, 212), das in einer Pfanne (90, 234, 316) endet, die eine Öffnung zum Aufnehmen des Kugelelements hat, wobei die Pfanne eine mindestens teilweise kugelförmige innere Oberfläche hat; eine Schale (122, 236, 318), die in der Pfanne angeordnet ist und eine Öffnung zum Aufnehmen des sich von der Spiegelbaugruppe erstreckenden Kugelelements und eine der Öffnung gegenüberliegende Seite hat, wobei die Schale das Kugelelement weitgehend umschließt; und ein Vorbelastungselement (124, 252, 328), das mit der der Öffnung gegenüberliegenden Seite der Schale in Eingriff steht, so daß die Schale gegen die Pfanne forciert wird und die Schale dadurch um das Kugelelement herum zusammengedrückt wird, dadurch gekennzeichnet, daß die Halterung ein einzelnes Kugelgelenk (44) hat, das die Pfanne (90, 234, 316) aufweist, wobei die Pfanne starr am zweiten Ende (42, 212) des Spiegelarms (36, 206, 300) gehalten wird, und der Spiegelarm ferner Mittel (118, 246, 332) am zweiten Ende des Spiegelarms, angrenzend an die Schale, zum Halten des Vorbelastungselements in vorbelastendem Eingriff mit der der Öffnung gegenüberliegenden Seite der Schale aufweist.

2. Halterung nach Anspruch 1, wobei die Schale und das Vorbelastungselement sich zwischen der Schale und dem Vorbelastungselement erstreckende Mittel (140, 142, 242, 326, 344) zum Anordnen der Schale auf dem Vorbelastungselement aufweisen, um die Schale in der Pfanne zu positionieren.

3. Halterung nach Anspruch 1 oder 2, die ferner einen Mechanismus (102, 340) aufweist, der die vom Vorbelastungselement auf die Schale ausgeübte Kraft anpaßt.

4. Halterung nach Anspruch 3, wobei der Mechanismus ein verstellbares Befestigungselement (102, 340) zum Bewegen des Vorbelastungselements in bezug auf die Pfanne aufweist.

5. Halterung nach einem der vorangehenden Ansprüche, wobei das Vorbelastungselement eine Blattfeder (124, 252, 328) aufweist.

6. Halterung nach einem der vorangehenden Ansprüche, wobei der Spiegelarm an einem von der Pfanne (90) entfernten ersten Ende (38) in einem Sicherungselement (28, 210) getragen wird, das am Fahrzeug befestigt ist, und Mittel (40, 208) zum lösbaren Verbinden des ersten Endes des Arms mit dem Sicherungselement bereitgestellt sind, so daß der Arm auf Stoß durch eine auf den Arm einwirkende Kraft vorbestimmter Größe hin vom Sicherungselement gelöst und getrennt werden kann.

7. Halterung nach einem der vorangehenden Ansprüche, wobei die Pfanne ein Teil (220), das am zweiten Ende (42, 212) des Arms befestigt und von ihm abhängig ist und eine Vorderseite (222) auf einer Seite und eine Aussparung (226) auf einer zweiten und gegenüberliegenden Seite hat; und ein Loch (234) umfaßt, das sich von der Stirnseite durch das befestigte Teil zur zweiten Seite erstreckt und dimensioniert ist, um das Kugelelement dadurch frei aufzunehmen; wobei die Schale in der Aussparung angeordnet ist und das Kugelelement in ihr aufnimmt, wobei die Schale eine allgemein kugelförmige äußere Oberfläche hat, die mit der inneren Oberfläche des Lochs in Eingriff steht, und wobei das Vorbelastungselement eine Feder (226) umfaßt, deren eines Ende (248) in der Aussparung angeordnet ist, wobei die Feder zum Forcieren der Schale in das Loch und zum Klemmen der Schale um das Kugelelement herum mit der Schale in Eingriff steht.

8. Halterung nach Anspruch 7, die ferner eine auf der Aussparung aufgenommene und die Feder und die Schale verdeckende Abdeckung (258) aufweist.

9. Halterung nach Anspruch 7 oder 8, wobei die Feder ein entgegengesetztes Ende (336) hat, das ausgelegt ist, um in bezug auf die Pfanne verstellbar zu sein, um eine von der Feder auf die Schale ausgeübte Klemmkraft anzupassen.

10. Halterung nach einem der Ansprüche 1 bis 6, wobei die Pfanne ein erstes Teil (70) einer allgemein kugelförmigen Klemme, das vom zweiten Ende (42, 212) des Arms getragen wird, und ein zweites Teil (84) einer allgemein kugelförmigen Klemme aufweist, das abnehmbar mit dem ersten Teil verbunden ist und mit dem ersten Teil zusammenwirkt, um die allgemein kugelförmige Klemme zu definieren.

11. Kombination einer Halterung nach Anspruch 1 und einer Rückspiegelbaugruppe, wobei der Spiegelarm ein erstes Ende (38, 208) hat, das eine Losbrechverbindung mit dem vorderen Dachteil eines Fahrzeugs über der Fahrzeug-Windschutzscheibe bildet, und die Rückspiegelbaugruppe (52) ein sich von ihr erstreckendes Kugelelement hat, wobei das Kugelelement (46) in der Schale aufgenommen ist, um eine Einstellung für den Rückspiegel zu bieten.

## Revendications

1. Un support pour un ensemble à rétroviseur de véhicule, ledit rétroviseur étant muni d'un élément à boule qui se prolonge à partir du rétroviseur, le support comportant un ensemble de maintien (36, 206, 300) ayant une seconde extrémité (42, 212) qui se termine par une douille (90, 234, 316) dotée d'une ouverture pour recevoir l'élément à boule, la douille ayant une surface intérieure au moins partiellement sphérique; une coquille (122, 236, 318) disposée à l'intérieur de la douille et munie d'une ouverture pour recevoir l'élément à boule qui se prolonge à partir de l'ensemble à rétroviseur et un côté opposé à l'ouverture, la coquille renfermant substantiellement l'élément à bille; et un élément de précharge (124, 252, 328) qui se met en prise avec le côté de la coquille opposé à l'ouverture pour forcer la coquille contre la douille et comprimer ainsi la coquille autour de l'élément à boule, caractérisé en ce que le support est doté d'un joint à rotule unique (44) qui inclut la douille (90, 234, 316), la douille étant maintenue rigidement sur la seconde extrémité (42, 212) de l'ensemble de maintien (36, 206, 300), et l' ensemble de maintien inclut de plus un moyen (118, 246, 332), sur la seconde extrémité de l'ensemble de maintien adjacente à la coquille, pour retenir l'élément de précharge en prise de précharge avec le côté de la coquille qui est opposé à l'ouverture.

2. Un support selon la revendication 1, dans lequel la coquille et l'élément de précharge incluent un moyen (140, 142, 242, 326, 344) qui se prolonge entre la coquille et l'élément de précharge pour positionner la coquille sur l'élément de précharge afin de positionner la coquille à l'intérieur de la douille.

3. Un support selon la revendication 1 ou 2, qui inclut de plus un mécanisme (102, 340) qui ajuste la force exercée sur la coquille par l'élément de précharge.

4. Un support selon la revendication 3, dans lequel le mécanisme inclut une fixation ajustable (102, 340) pour déplacer l'élément de précharge relativement à la douille.

5. Un support selon l'une quelconque des revendications précédentes, dans lequel l'élément de précharge inclut un ressort à lame (124, 252, 328).

6. Un support selon l'une quelconque des revendications précédentes, dans lequel l'ensemble de maintien est supporté à une première extrémité (38) distante de la douille (90) dans un élément de retenue (28, 210) attaché au véhicule et des moyens (40, 208) sont prévus pour raccorder de manière détachable la première extrémité de l'ensemble de maintien à l'élément de retenue pour permettre à l'ensemble de maintien de libérer l'élément de retenue et de s'en séparer en cas d'impact par une force d'une amplitude prédéterminée qui agit sur l'ensemble de maintien.

7. Un support selon l'une quelconque des revendications précédentes, dans lequel la douille comporte une portion (220) se prolongeant vers le bas et fixée à la seconde extrémité (42, 212) de l'ensemble de maintien, et qui possède une face (222) d'un côté et un évidement (226) d'un second côté qui lui est opposé; et un trou (234) qui se prolonge à travers la portion fixe à partir de la face jusqu'au second côté et ayant une dimension qui permet de recevoir librement l'élément à boule à travers le trou; la coquille est disposée dans l'évidement, dans lequel elle reçoit l'élément à boule, la coquille ayant une surface extérieure généralement sphérique qui se met en prise avec la surface intérieure du trou; et l'élément de précharge se compose d'un ressort (226) dont une extrémité (248) est disposée dans l'évidement, le ressort se mettant en prise avec la coquille pour forcer la coquille dans le trou et serrer la coquille autour de l'élément à boule.

8. Un support selon la revendication 7, qui inclut de plus un couvercle (258) qui s'adapte au-dessus de l'évidement et qui dissimule le ressort et la coquille.

9. Un support selon la revendication 7 ou 8, dans lequel le ressort a une extrémité opposée (336) adaptée pour être ajustable relativement à la douille pour ajuster une force de serrage exercée par le ressort sur la coquille.

10. Un support selon l'une quelconque des revendications 1 à 6, dans lequel la douille comprend une première portion (70) d'un dispositif de serrage généralement sphérique porté par la seconde extrémité (42, 212) de l'ensemble de maintien; et une seconde portion (84) d'un dispositif de serrage généralement sphérique raccordé de manière détachable à la première portion et qui coopère avec la première portion pour définir le dispositif de serrage généralement sphérique.

11. La combinaison d'un support tel que revendiqué à la revendication 1 et d'un ensemble rétroviseur, dans lequel l'ensemble de maintien du rétroviseur a une première extrémité (38, 208) qui forme un raccord détachable avec la partie avant d'un véhicule au-dessus du pare-brise de ce véhicule; et l'ensemble à rétroviseur (52) a un élément à boule qui s'étend à partir du rétroviseur, l'élément à boule (46) étant adapté dans la coquille pour permettre d'ajuster le rétroviseur.
